# EUROPEAN PATENT SPECIFICATION

(11) **EP 4 207 823 B1**
(45) Date of publication and mention of the grant of the patent: **01.01.2025**
(21) Application number: 22205038.7
(22) Date of filing: 02.11.2022
(51) Int. Cl.: H04W 4/029, G06Q 10/00, G06Q 50/00, G06Q 10/08, G05D 1/00, G06Q 10/02, G06Q 10/063, G06Q 50/40

(54) **AUTONOMOUS DRIVING MOBILE SERVICE ROBOT WAREHOUSING AND DELIVERY SYSTEM**
LAGER- UND AUSGABESYSTEM FÜR EINEN AUTONOMEN FAHRENDEN MOBILEN DIENSTROBOTER
SYSTÈME D'ENTREPOSAGE ET DE LIVRAISON DE ROBOT DE SERVICE MOBILE À CONDUITE AUTONOME

(30) Priority: 31.12.2021 KR 20210194234
(43) Date of publication of application: 05.07.2023
(73) Proprietor: IROVA Co., Ltd., Daegu 42709 (KR)
(72) Inventor: LEE, Bae Hee, 42028 Daegu (KR); KWAK, Yu Seong, 42246 Daegu (KR)
(74) Representative: Vossius & Partner Patentanwälte Rechtsanwälte mbB

(56) References cited:
- WO-A1-2021/049276
- KR-A- 20160 088 264
- US-A1- 2022 185 340

## Description

### BACKGROUND OF THE INVENTION

### Cross Reference to Related Application of the Invention

The present application claims the benefit of Korean Patent Application No.10-2021-0194234 filed in the Korean Intellectual Property Office on 12.31,2021.

### Field of the Invention

The present invention relates to an autonomous driving mobile service robot warehousing and delivery system, and more specifically, to an autonomous driving mobile service robot warehousing and delivery system that is capable of systematically storing and delivering a plurality of robot bodies from line parts by means of a server and comparing the number of delivery times of the robot bodies by line part to allow the robot bodies to be delivered sequentially from the line part having the smallest number of delivery times, thereby distributing the usage rate of the robot bodies disposed by line part.

### Background of the Related Art

Recently, many interests in mobility vehicles as transportation means having the ability to move freely have been developed, and such mobility vehicles are adequate for transportation means within a near distance or specific region because they are not influenced by traffic jam. Most of them are driven with electric energy, but with internal combustion engines, thereby advantageously causing no environmental pollution. Representative mobility vehicles include segways, wheel electric scooters, electric kickboards, and the like, and further, mobility service robots available in a golf course have been recently developed as golf carts.

There are a manual mode and an automatic mode in the driving mode of the golf cart. In the manual mode, a steering wheel, an accelerator, a brake, and the like are controlled by a driver of the golf cart so that he or she controls golf cart driving for himself and herself, and in the automatic mode, the golf cart is autonomously driven by means of various control devices mounted thereon, irrespective of the driver's control.

At present, lots of mobility technologies have been developed to allow autonomous driving mobility vehicles to be delivered from parking lots or warehouses and thus moved to their users through their autonomous driving, without being driven by drivers.

One of the conventional mobility technologies is disclosed in Korean Patent Application Laid-open No. 10-2016-0088264 wherein an autonomous driving vehicle hailing system for moving an autonomous driving vehicle to a user's desired position to allow him or her to hail the vehicle. In specific, the autonomous driving vehicle hailing system, which is mounted inside the autonomous driving vehicle or in a navigation device or autonomous driving control system, includes an autonomous driving vehicle hailing controller configured to input a hailing position name frequently used by means of a touch screen or voice, search and store the position name in GPS or navigation, store the position information by means of external cameras of the autonomous driving vehicle, store parking lot numbers and hailing position images if the hailing position is an underground parking lot or tower parking lot, allow a hailing controller to automatically obtain final getting off position information by means of the GPS and navigation and the camera functions of the autonomous driving control system after the user gets off from the autonomous driving vehicle if a standby place is the final getting off place, store the position information as position information on a "final getting off place" blank, receive a new place name by means of the user's voice or text if the standby place is a designated place by him or her, search and obtain the received place by means of the GPS and navigation, check the hailing position if hailing position information is received from his or her smartphone or wearable device by means of his or her voice or text or if a hailing command is received from him or her, provide the position information to the navigation device or autonomous driving control system of the autonomous driving vehicle, allow him or her to hail the autonomous driving vehicle to the designated position, and transmit the hailing of the autonomous driving vehicle to his or her smartphone by means of wireless communication means; and an autonomous driving vehicle hailing application mounted in his or her smartphone or wearable device to store the hailing position name frequently used, which is stored in the autonomous driving vehicle hailing controller, and to transmit his or her desired hailing position information to the autonomous driving vehicle hailing controller.

Another conventional mobility technology is disclosed in Korean Patent Application Laid-open No. 10-2019-0109804 wherein autonomous driving vehicle hailing service method includes the steps of: allowing a user terminal to request a service log record using a vehicle hailing service to a service execution server; allowing the service execution server to request the authentication for the service log record to an authentication management server in response to the request; allowing the authentication management server to generate transaction information for verification in response to the authentication request for the service log record and then transmit the generated transaction information for verification to a block chain server; and allowing the block chain server to perform the authentication for the transaction information for verification, and if the authentication successes, transmitting a transaction identifier for the transaction information for verification to the service execution server.

Yet another conventional mobility technology is disclosed in Korean Patent Application Laid-open No. 10-2021-0119887 wherein a robot control system disposed in a robot to control the robot includes: a control module for controlling the robot to allow the robot to move along a predetermined autonomous driving path in an autonomous driving mode; a mode switching module for switching the autonomous driving mode to a moving path resetting mode if a given switching condition is satisfied while the robot is being in the autonomous driving mode; and a setting module for tracking, if the robot moves by an external force in the moving path resetting mode, the moving path of the robot while the robot is moving by the external force, and resetting the autonomous driving path, based on the tracked moving path.

The above-mentioned conventional technologies relate to the autonomous driving mobility vehicles that are moved to the users under the hailing requests of the users, but a technology wherein a plurality of mobility vehicles such as golf carts disposed in a specific region like a golf course are stored and delivered in and from the specific region has been not suggested and developed at all. Therefore, there is a definite need to develop a new system for systematically managing a large number of mobility vehicles.

US 2022/185340 A1 discloses a parking assist system which has a get-off area where users can get off autonomous cars, a parking lot where a plurality of autonomous cars can be parked, and a get-on area where users can get on cars. The get-on area includes a plurality of zones, where a plurality users can get on the cars at the same time.

### SUMMARY OF THE INVENTION

Accordingly, the present invention has been made in view of the above-mentioned problems occurring in the related art, and it is an object of the present invention to provide an autonomous driving mobile service robot warehousing and delivery system that is configured to have line parts, units, robot bodies, and a server having a delivery information transmitter for calculating the information of the number of robot bodies required according to a user's registration and use information to transmit delivery information to receivers, a warehousing information transmitter for transmitting warehousing information to the receivers according to the user's return request of the delivered robot bodies, and a delivery number receiver for receiving the information of the number of delivery times from counting parts, so that by means of the server, the robot bodies can be systematically stored and delivered in and from the line parts, and configured to have the counting parts adapted to count the number of delivery times of the robot bodies from the respective line parts to transmit the information of the number of delivery times to the delivery number receiver, so that the delivery information transmitter operates cooperatively with the delivery number receiver and compares the number of delivery times by line part that is counted by the counting parts to allow the robot bodies to be delivered sequentially from the units of the line part having the smallest number of delivery times.

To accomplish the above-mentioned objects, according to the present invention, there is provided an autonomous driving mobile service robot warehousing and delivery system including: one or more line parts; robot bodies disposed on each line part and manually driven by a user's control or autonomously driven by control modules; the control modules disposed on the corresponding robot bodies to provide position information of the robot bodies, receive warehousing and delivery information of the robot bodies from a server, and control driving of the robot bodies in response to the received information to store the robot bodies in the line parts or deliver the robot bodies from the line parts; the server for calculating information of the number of robot bodies required according to the user's registration and usage information, transmitting delivery information to the control modules, transmitting warehousing information to the control modules according to the user's return request of the delivered robot bodies, receiving information of the number of delivery times from counting parts, comparing the number of delivery times by line part counted by the counting parts, and transmitting the compared results to the control modules to allow the robot bodies to be delivered sequentially from the line part having the smallest number of delivery times; and the counting parts for counting the number of delivery times of the robot bodies from the respective line parts to transmit the information of the number of delivery times to the server.

According to the present invention, desirably, each line part may include units formed of sections Nos. 1 to N lined up by compartment thereof, the robot bodies being located on the units, and each control module may include a sensor for providing position information of the corresponding robot body, a receiver having a delivery information receiver for receiving delivery information of the corresponding robot body from the server and an warehousing information receiver for receiving warehousing information of the corresponding robot body from the server, and a driving controller for controlling driving of the corresponding robot body to deliver the corresponding robot body from the corresponding unit or store the corresponding robot body in the corresponding unit, based on the information received from the receiver.

According to the present invention, desirably, the server may include a delivery information transmitter for calculating the information of the number of robot bodies required according to the user's registration and usage information to transmit the delivery information to the delivery information receivers, a warehousing information transmitter for transmitting the warehousing information to the warehousing information receivers according to the user's return request of the delivered robot bodies, and a delivery number receiver for receiving the information of the number of delivery times from the counting parts, and the delivery information transmitter may operate cooperatively with the delivery number receiver, compare the number of delivery times by line part counted by the counting parts, and transmit the compared results to the delivery information receivers to allow the robot bodies to be delivered sequentially from the units of the line part having the smallest number of delivery times.

### BRIEF DESCRIPTION OF THE DRAWINGS

The above and other objects, features and advantages of the present invention will be apparent from the following detailed description of the embodiments of the invention in conjunction with the accompanying drawings, in which:
FIG. 1 is a schematic block diagram showing a configuration of an autonomous driving mobile service robot warehousing and delivery system according to the present invention;
FIG. 2 is an exemplary view showing a use state of the autonomous driving mobile service robot warehousing and delivery system according to the present invention;
FIG. 3 is an exemplary view showing a state where robot bodies are delivered by means of driving controllers of the system according to the present invention;
FIG. 4 is an exemplary view showing a state where robot bodies are arranged by means of arrangement controllers of the system according to the present invention; and
FIG. 5 is an exemplary view showing a state where robot bodies are stored by means of the driving controllers of the system according to the present invention.

### DETAILED DESCRIPTION OF THE PREFERRED EMBODIMENTS

The present invention relates to an autonomous driving mobile service robot warehousing and delivery system that is capable of systematically storing and delivering a plurality of robot bodies from line parts by means of a server and comparing the number of delivery times of the robot bodies by line part to allow the robot bodies to be delivered sequentially from the line part having the smallest number of delivery times, thereby distributing the usage rate of the robot bodies disposed by line part.

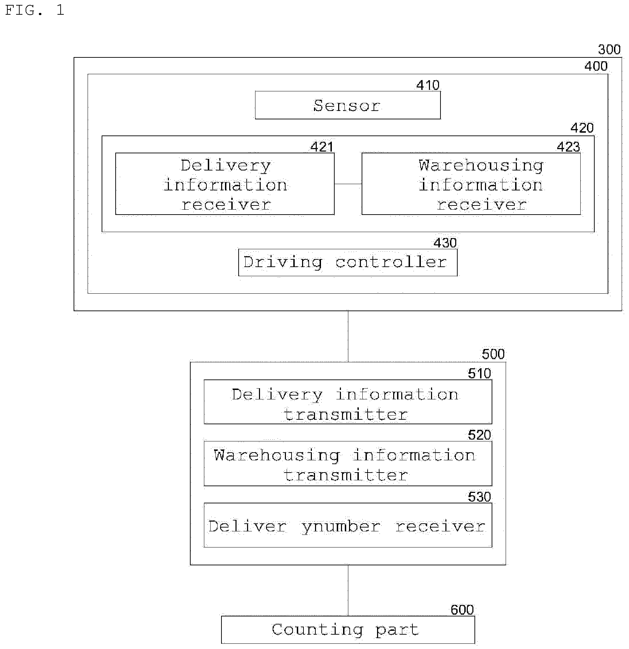

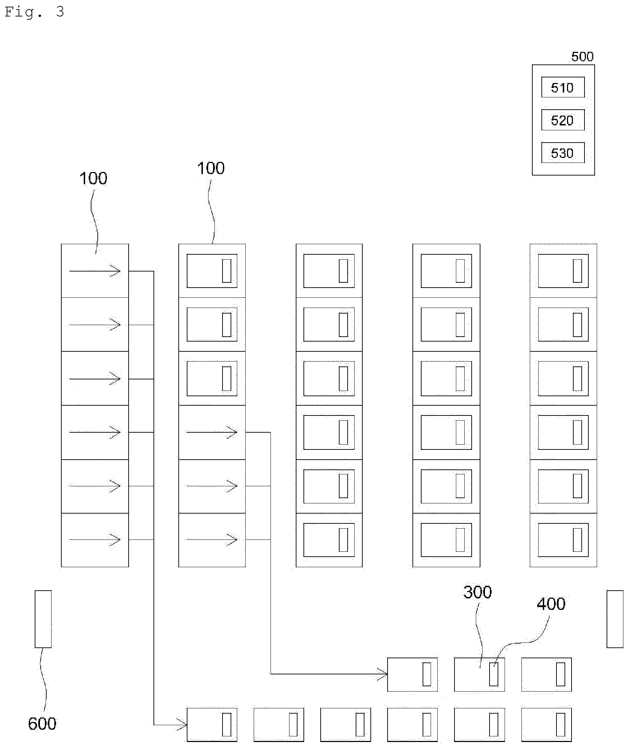

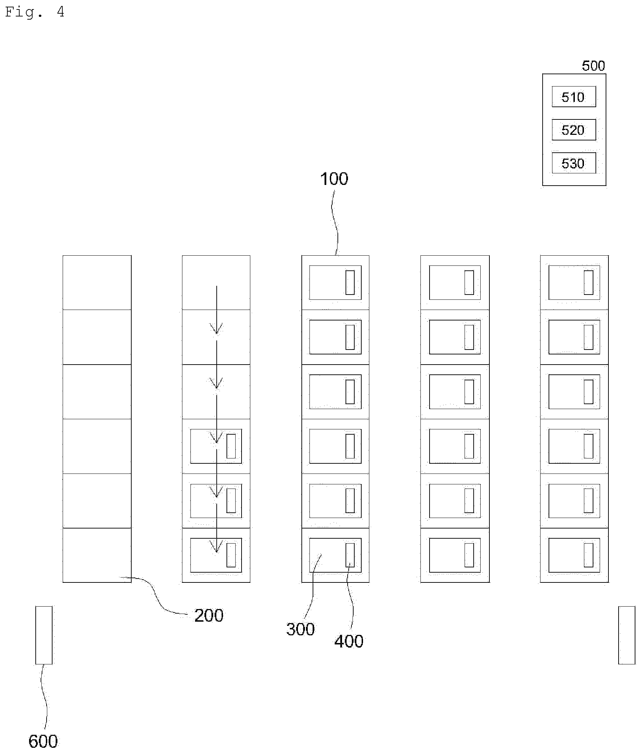

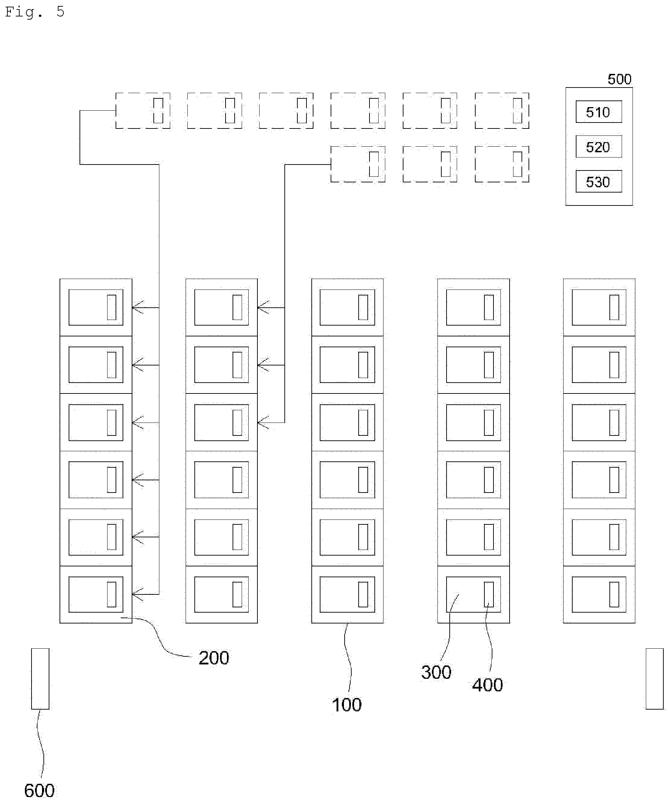

Now, an explanation of a configuration and operations of an autonomous driving mobile service robot warehousing and delivery system according to the present invention will be given in detail with reference to FIGs. 1 to 5.

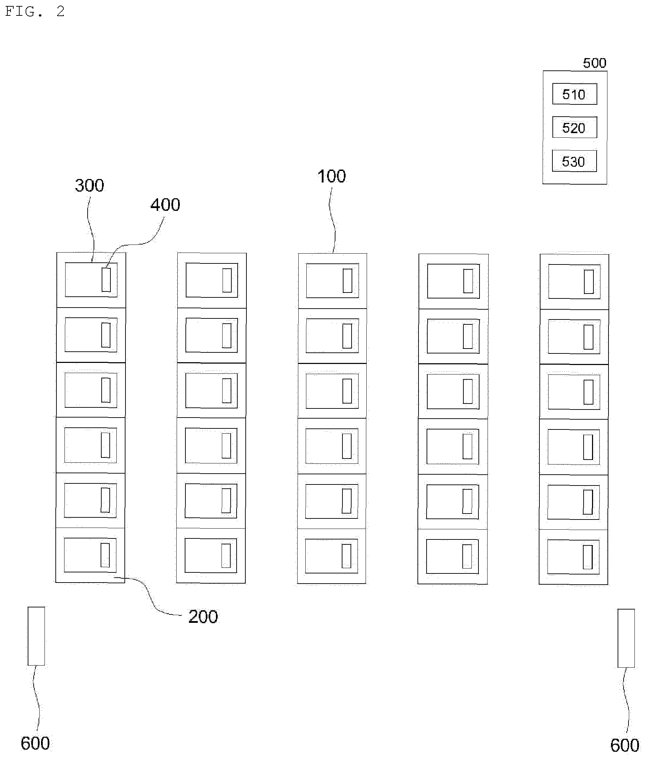

Referring first to FIGs. 1 and 2, an autonomous driving mobile service robot warehousing and delivery system according to the present invention includes: one or more line parts 100; robot bodies 300 disposed on each line part 100 and manually driven by a user's control or autonomously driven by control modules 400; the control modules 400 disposed on the corresponding robot bodies 300 to provide position information of the robot bodies 300, receive warehousing and delivery information of the robot bodies 300 from a server 500, and control driving of the robot bodies 300 in response to the received information to store the robot bodies 300 in the line parts 100 or deliver the robot bodies 300 from the line parts 100; the server 500 for calculating information of the number of robot bodies 300 required according to the user's registration and usage information, transmitting delivery information to the control modules 400, transmitting warehousing information to the control modules 400 according to the user's return request of the delivered robot bodies 300, receiving information of the number of delivery times from counting parts 600, comparing the number of delivery times by line part 100 counted by the counting parts 600, and transmitting the compared results to the control modules 400 to allow the robot bodies 300 to be delivered sequentially from the line part 100 having the smallest number of delivery times; and the counting parts 600 for counting the number of delivery times of the robot bodies 300 from the respective line parts 100 to transmit the information of the number of delivery times to the server 500.

Under the above-mentioned configuration, an explanation of the system according to the present invention will be given in more detail below. One or more line parts 100 are spaced apart from one another at given intervals in a transverse direction so that the robot bodies 300 disposed in units 200 as will be discussed later are gently delivered and stored therefrom and therein.

The units 200 are provided by the compartment of each line part 100.

In this case, the units 200 are desirably formed of sections Nos. 1 to N lined up by the compartment of each line part 100, so that spaces where the line parts 100 and the units 200 are built can be provided and efficient delivery and warehousing of the robot bodies 300 located in the respective units 200 are achieved.

The robot bodies 300 are located in the respective units 200 and manually driven by the user's control or autonomously driven by the control modules 400.

The control modules 400 are disposed in the corresponding robot bodies 300, and each control module 400 includes a sensor 410 for providing position information of the corresponding robot body 300, a receiver 420 having a delivery information receiver 421 for receiving delivery information of the corresponding robot body 300 from the server 500 and an warehousing information receiver 423 for receiving warehousing information of the corresponding robot body 300 from the server 500, and a driving controller 430 for controlling driving of the corresponding robot body 300 to deliver the corresponding robot body 300 from the corresponding unit 200 or store the corresponding robot body 300 in the corresponding unit 200, based on the information received from the receiver 420.

In this case, the sensor 410 is used with a variety of sensors such as GPS, LiDAR, beacon, Radio Frequency (RF), and the like.

The server 500 includes a delivery information transmitter 510 for calculating the information of the number of robot bodies 300 required according to the user's registration and usage information to transmit the delivery information to the delivery information receivers 421, a warehousing information transmitter 520 for transmitting the warehousing information to the warehousing information receivers 423 according to the user's return request of the delivered robot bodies 300, and a delivery number receiver 530 for receiving the information of the number of delivery times from the counting parts 600.

The counting parts 600 count the number of delivery times of the robot bodies 300 from the respective line parts 100 to transmit the information of the number of delivery times to the delivery number receiver 530.

In this case, each counting part 600 is desirably located at one side in front of the corresponding line part 100.

Further, the delivery information transmitter 510 operates cooperatively with the delivery number receiver 530, compares the number of delivery times by line part 100 counted by the counting parts 600, and transmits the compared results to the delivery information receivers 421 to allow the robot bodies 300 to be delivered sequentially from the units 200 of the line part 100 having the smallest number of delivery times.

Further, the units 200 are desirably formed of the sections Nos. 1 to N lined up by the compartment of each line part 100.

In this case, the driving controllers 430 of the control modules 400 are configured to allow the robot bodies 300 located on the section No. 1 to be first delivered forward from the line parts 100, based on the information received from the delivery information receivers 421.

If a number of robot bodies 300 are delivered according to the delivery information received from the delivery information receivers 421, they may collide against one another, and to prevent such collision, the robot bodies 300 are delivered sequentially in order of section numbers.

Further, each control module 400 includes an arrangement controller for moving the corresponding robot body 300 not delivered from the line part 100 where one or more robot bodies 300 are delivered through the driving controllers 430 to a direction toward the section No. 1 from the corresponding section thereof by the number of robot bodies 300 delivered from the corresponding line 100.

In specific, the arrangement controllers are adapted to move the robot bodies 300 not delivered yet to the sections on which the robot bodies 300 have been delivered forward from the line part 100 through the driving controllers 430 and to locate the robot bodies 300 on the sections. If the delivered robot bodies 300 are stored in the same sections again and delivered from the same sections again, the number of robot bodies 300 used is increased only in the adjacent sections on the front sides, thereby causing the number of times of use of the line parts 100 to be different according to the line parts 100. According to the present invention, the occurrence of the difference can be prevented by adopting the arrangement controllers.

Further, the driving controllers 430 are configured to store the robot bodies 300 incoming after delivered in the rear sides of the line parts 100 sequentially, based on the information received from the warehousing information receivers 423.

As the robot bodies 300 not delivered move to the front sides of the line parts 100 by means of the arrangement controllers, in specific, the robot bodies 300 incoming after delivered are stored sequentially in the rear sides of the line parts 100.

As described above, the autonomous driving mobile service robot warehousing and delivery system according to the present invention is configured to perform its original purpose of delivering the autonomous driving robot bodies from a car warehouse to move the robot bodies to the user, to systematically store and deliver the robot bodies located on the units of one or more line parts from the units by means of the server to thus provide many conveniences for customers, and to compare the number of delivery times of the robot bodies by line part through the counting parts to thus allow the robot bodies to be delivered sequentially from the line part having the smallest number of delivery times so that each robot body can be prevented from aging owing to its usage amount having a deviation in the number of delivery times of the robot bodies, and batteries for driving electric motors of the robot bodies can be extended in life span and other components of the robot bodies can be managed more systematically under uniform usage frequency of the robot bodies.

## Claims

1. An autonomous driving mobile service robot warehousing and delivery system comprising:
a plurality of line parts (100);
robot bodies (300) disposed on each line part (100) and manually driven by a user's control or autonomously driven by control modules (400);
the control modules (400) disposed on the corresponding robot bodies (300) to provide position information of the robot bodies (300), receive warehousing and delivery information of the robot bodies (300) from a server (500), and control driving of the robot bodies (300) in response to the received information to store the robot bodies (300) in the line parts (100) or deliver the robot bodies (300) from the line parts (100);
the server (500) configured to calculate information of the number of robot bodies (300) required according to the user's registration and usage information, transmit delivery information to the control modules (400), transmit warehousing information to the control modules (400) according to the user's return request of the delivered robot bodies (300), and receive information of the number of delivery times from counting parts (600),
**characterized in that** the server (500) is further configured to compare the number of delivery times by line part (100) counted by the counting parts (600), and transmit the compared results to the control modules (400) to allow the robot bodies (300) to be delivered sequentially from the line part (100) having the smallest number of delivery times; and
the counting parts (600) are configured to count the number of delivery times of the robot bodies (300) from the respective line parts (100) to transmit the information of the number of delivery times to the server (500).

2. The system according to claim 1, wherein each line part (100) comprises units (200) formed of sections Nos. 1 to N lined up by compartment thereof, the robot bodies (300) being located on the units (200), and each control module (400) comprises:
a sensor (410) configured to provide position information of the corresponding robot body (300);
a receiver (420) having a delivery information receiver (421) configured to receive delivery information of the corresponding robot body (300) from the server (500) and an warehousing information receiver (423) configured to receive warehousing information of the corresponding robot body (300) from the server (500); and
a driving controller (430) configured to control driving of the corresponding robot body (300) to deliver the corresponding robot body (300) from the corresponding unit (200) or store the corresponding robot body (300) in the corresponding unit (200), based on the information received from the receiver (420).

3. The system according to claim 2, wherein the server (500) comprises:
a delivery information transmitter (510) configured to calculate the information of the number of robot bodies (300) required according to the user's registration and usage information to transmit the delivery information to the delivery information receivers (421);
a warehousing information transmitter (520) configured to transmit the warehousing information to the warehousing information receivers (423) according to the user's return request of the delivered robot bodies (300); and
a delivery number receiver (530) configured to receive the information of the number of delivery times from the counting parts (600), and
the delivery information transmitter (510) configured to operate cooperatively with the delivery number receiver (530), compare the number of delivery times by line part (100) counted by the counting parts (600), and transmit the compared results to the delivery information receivers (421) to allow the robot bodies (300) to be delivered sequentially from the units (200) of the line part (100) having the smallest number of delivery times.

4. The system according to claim 3, wherein the driving controllers (430) of the control modules (400) are configured to allow the robot bodies (300) located in the section No. 1 to be first delivered forward from the line parts (100), based on the information received from the delivery information receivers (421) .

5. The system according to claim 4, wherein each control module (400) comprises an arrangement controller configured to move the corresponding robot body (300) not delivered from the line part (100) where one or more robot bodies (300) are delivered through the driving controllers (430) to a direction toward the section No. 1 from the corresponding section thereof by the number of robot bodies (300) delivered from the corresponding line (100).

6. The system according to claim 5, wherein the driving controllers (430) are configured to store the robot bodies (300) incoming after delivered in the rear sides of the line parts (100) sequentially, based on the information received from the warehousing information receivers (423).

## Patentansprüche

1. Lagerungs- und Abgabesystem für einen autonom fahrenden, mobilen Dienstroboter, umfassend:
eine Vielzahl von Streckenabschnitten (100);
Roboterkörper (300), die an jedem Streckenabschnitt (100) angeordnet sind und manuell durch die Bedienung eines Benutzers oder autonom durch Steuermodule (400) angetrieben werden;
wobei die Steuermodule (400) an den entsprechenden Roboterkörpern (300) angeordnet sind, um Positionsinformationen der Roboterkörper (300) bereitzustellen, Lagerungs- und Abgabeinformationen der Roboterkörper (300) von einem Server (500) zu empfangen und den Antrieb der Roboterkörper (300) als Reaktion auf die empfangenen Informationen zu steuern, um die Roboterkörper (300) in den Streckenabschnitten (100) zu lagern oder die Roboterkörper (300) von den Streckenabschnitten (100) abzugeben;
wobei der Server (500) dazu ausgelegt ist, Informationen über die Anzahl von Roboterkörpern (300) zu errechnen, die gemäß den Informationen über Registrierung und Nutzung des Benutzers erforderlich sind, Abgabeinformationen an die Steuermodule (400) zu übermitteln, Lagerungsinformationen an die Steuermodule (400) gemäß der Benutzeranforderung zur Rückgabe der abgegebenen Roboterkörper (300) zu übermitteln, und Informationen über die Anzahl der erfolgten Abgaben von Zähleinrichtungen (600) zu empfangen,
**dadurch gekennzeichnet, dass** der Server (500) ferner dazu ausgelegt ist, die Anzahl der erfolgten Abgaben pro Streckenabschnitt (100), die von den Zähleinrichtungen (600) gezählt wurden, zu vergleichen und die Vergleichsergebnisse an die Steuermodule (400) zu übermitteln, um zu ermöglichen, dass die Roboterkörper (300) nacheinander von dem Streckenabschnitt (100) mit der geringsten Anzahl von erfolgten Abgaben abgegeben werden; und
die Zähleinrichtungen (600) dazu ausgelegt sind, die Anzahl der erfolgten Abgaben der Roboterkörper (300) von den jeweiligen Streckenabschnitten (100) zu zählen, um die Information über die Anzahl der erfolgten Abgaben an den Server (500) zu übermitteln.

2. System nach Anspruch 1, wobei jeder Streckenabschnitt (100) Einheiten (200) umfasst, die aus Teilbereichen Nr. 1 bis N gebildet sind, die nach Fächern aufgereiht sind, wobei die Roboterkörper (300) an den Einheiten (200) angeordnet sind, und jedes Steuermodul (400) umfasst:
einen Sensor (410) zum Bereitstellen von Positionsinformationen des entsprechenden Roboterkörpers (300) ;
einen Empfänger (420) mit einem Abgabeinformationsempfänger (421) zum Empfangen von Abgabeinformationen des entsprechenden Roboterkörpers (300) von dem Server (500) und mit einem Lagerungsinformationsempfänger (423) zum Empfangen von Lagerungsinformationen des entsprechenden Roboterkörpers (300) von dem Server (500); und
eine Antriebssteuerung (430) zum Steuern des Antriebs des entsprechenden Roboterkörpers (300), um den entsprechenden Roboterkörper (300) aus der entsprechenden Einheit (200) abzugeben oder den entsprechenden Roboterkörper (300) in der entsprechenden Einheit (200) zu lagern, basierend auf den vom Empfänger (420) empfangenen Informationen.

3. System nach Anspruch 2, wobei der Server (500) umfasst:
einen Abgabeinformationssender (510), der dazu ausgelegt ist, die Informationen über die Anzahl der Roboterkörper (300) zu errechnen, die gemäß den Informationen über Registrierung und Nutzung des Benutzers erforderlich sind, um die Abgabeinformationen an die Abgabeinformations-Empfänger (421) zu übermitteln;
einen Lagerungsinformationssender (520), der dazu ausgelegt ist, die Lagerungsinformationen an die Lagerungsinformationsempfänger (423) entsprechend der Benutzeranforderung zur Rückgabe der abgegebenen Roboterkörper (300) zu übermitteln; und
einen Abgabeanzahlempfänger (530), der dazu ausgelegt ist, die Informationen über die Anzahl der erfolgten Abgaben von den Zähleinrichtungen (600) zu empfangen,
wobei der Abgabeinformationssender (510) dazu ausgelegt ist, mit dem Abgabeanzahlempfänger (530) kooperierend zusammenzuwirken, die Anzahl der erfolgten Abgaben pro Streckenabschnitt (100), die von den Zähleinrichtungen (600) gezählt wurden, zu vergleichen und die Vergleichsergebnisse an die Abgabeinformationsempfänger (421) zu übermitteln, um zu ermöglichen, dass die Roboterkörper (300) nacheinander von den Einheiten (200) des Streckenabschnitts (100) mit der geringsten Anzahl von erfolgten Abgaben abgegeben werden.

4. System nach Anspruch 3, wobei die Antriebssteuerungen (430) der Steuermodule (400) dazu ausgelegt sind, auf der Grundlage der von den Abgabeinformationsempfängern (421) empfangenen Informationen zu ermöglichen, dass die im Teilbereich Nr. 1 befindlichen Roboterkörper (300) voraus als erste von den Streckenabschnitten (100) abgegeben werden.

5. System nach Anspruch 4, wobei jedes Steuermodul (400) eine Anordnungssteuerung umfasst, die dazu ausgelegt ist, den entsprechenden Roboterkörper (300), der nicht von demjenigen Streckenabschnitt (100) abgegeben wurde, von dem ein oder mehrere Roboterkörper (300) abgegeben werden, durch die Antriebssteuerungen (430) von dem entsprechenden Teilbereich in Richtung zu dem Teilbereich Nr. 1 um die Anzahl von Roboterkörpern (300) zu bewegen, die von der entsprechenden Strecke (100) abgegeben wurden.

6. System nach Anspruch 5, wobei die Antriebssteuerungen (430) dazu ausgelegt sind, die Roboterkörper (300), die nach der Abgabe eintreffen, auf der Grundlage der von den Lagerungsinformationsempfängern (423) empfangenen Informationen nacheinander an den Hinterseiten der Streckenabschnitte (100) zu lagern.

## Revendications

1. Système d'entreposage et de livraison de robot de service mobile à conduite autonome comprenant :
une pluralité de parties de ligne (100) ;
des corps de robot (300) disposés sur chaque partie de ligne (100) et entraînés manuellement par une commande d'utilisateur ou entraînés de manière autonome par des modules de commande (400) ;
les modules de commande (400) disposés sur les corps de robot (300) correspondants pour fournir des informations de position des corps de robot (300), recevoir des informations d'entreposage et de livraison des corps de robot (300) depuis un serveur (500), et commander l'entraînement des corps de robot (300) en réponse aux informations reçues pour stocker les corps de robot (300) dans les parties de ligne (100) ou livrer les corps de robot (300) depuis les parties de ligne (100) ;
le serveur (500) configuré pour calculer des informations du nombre de corps de robot (300) requis selon les informations d'enregistrement et d'utilisation de l'utilisateur, transmettre des informations de livraison aux modules de commande (400), transmettre des informations d'entreposage aux modules de commande (400) selon la demande de retour de l'utilisateur des corps de robot (300) livrés, recevoir des informations du nombre de moments de livraison depuis des parties de comptage (600),
**caractérisé en ce que** le serveur (500) est en outre configuré pour comparer le nombre de moments de livraison par partie de ligne (100) compté par les parties de comptage (600), et transmettre les résultats comparés aux modules de commande (400) pour permettre la livraison de corps de robot (300) de manière séquentielle depuis la partie de ligne (100) présentant le plus petit nombre de moments de livraison ; et
les parties de comptage (600) sont configurées pour compter le nombre de moments de livraison des corps de robot (300) depuis les parties de ligne (100) respectives pour transmettre les informations du nombre de moments de livraison au serveur (500).

2. Système selon la revendication 1, dans lequel chaque partie de ligne (100) comprend des unités (200) composées de sections n° 1 à n alignées par compartiment de celles-ci, les corps de robot (300) étant situés sur les unités (200), et chaque module de commande (400) comprend :
un capteur (410) configuré pour fournir des informations de position du corps de robot (300) correspondant ;
un récepteur (420) présentant un récepteur d'informations de livraison (421) configuré pour recevoir du serveur (500) des informations de livraison du corps de robot (300) correspondant et un récepteur d'informations d'entreposage (423) configuré pour recevoir du serveur (500) des informations d'entreposage du corps de robot (300) correspondant ; et
un dispositif de commande d'entraînement (430) configuré pour commander l'entraînement du corps de robot (300) correspondant pour livrer le corps de robot (300) correspondant depuis l'unité (200) correspondante ou stocker le corps de robot (300) correspondant dans l'unité (200) correspondante, sur la base des informations reçues du récepteur (420).

3. Système selon la revendication 2, dans lequel le serveur (500) comprend :
un émetteur d'informations de livraison (510) configuré pour calculer les informations du nombre de corps de robot (300) requises selon les informations d'enregistrement et d'utilisation de l'utilisateur pour transmettre les informations de livraison aux récepteurs d'informations de livraison (421) ;
un émetteur d'informations d'entreposage (520) configuré pour transmettre les informations d'entreposage aux récepteurs d'informations d'entreposage (423) selon la demande de retour de l'utilisateur des corps de robots (300) livrés ; et
un récepteur de nombre de livraisons (530) configuré pour recevoir des parties de comptage (600) les informations du nombre de moments de livraison, et
l'émetteur d'informations de livraison (510) configuré pour fonctionner en coopération avec le récepteur de nombre de livraisons (530), comparer le nombre de moments de livraison par partie de ligne (100) compté par les parties de comptage (600), et transmettre les résultats comparés aux récepteurs d'informations de livraison (421) pour permettre la livraison des corps de robot (300) de manière séquentielle depuis les unités (200) de la partie de ligne (100) présentant le plus petit nombre de moments de livraison.

4. Système selon la revendication 3, dans lequel les dispositifs de commande d'entraînement (430) des modules de commande (400) sont configurés pour permettre aux corps de robot (300) situés dans la section n° 1 d'être tout d'abord livrés vers l'avant depuis des parties de ligne (100), sur la base des informations reçues des récepteurs d'informations de livraison (421).

5. Système selon la revendication 4, dans lequel chaque module de commande (400) comprend un dispositif de commande d'agencement configuré pour déplacer le corps de robot (300) correspondant non livré depuis la partie de ligne (100) où un ou plusieurs corps de robot (300) sont livrés par l'intermédiaire des dispositifs de commande d'entraînement (430) dans une direction vers la section n° 1 à partir de la section correspondante de celle-ci par le nombre de corps de robot (300) livrés depuis la ligne (100) correspondante.

6. Système selon la revendication 5, dans lequel les dispositifs de commande d'entraînement (430) sont configurés pour stocker les corps de robot (300) entrant après avoir été livrés dans les côtés arrière des parties de ligne (100) de manière séquentielle, sur la base des informations reçues des récepteurs d'informations d'entreposage (423).
